# EUROPEAN PATENT APPLICATION

(11) **EP 1 433 375 A1**
(43) Date of publication of application: **30.06.2004**
(21) Application number: 03079193.3
(22) Date of filing: 22.12.2003
(51) Int. Cl.: A01G 7/04, A01G 9/24

(54) **Improved automized apparatus for illuminating greenhouse plants**

(30) Priority: 24.12.2002 NL 1022260
(71) Applicant: J.J. Agrotech B.V., 5916 RH Venlo (NL)
(72) Inventor: van Rens, Jozef Gerardus Marie, 5913 RP Venlo (NL); Rutten, Jacobus Christiaan Peter, 5916 RH Venlo (NL)

(57) **Abstract**

The invention relates to an improved automatized apparatus (1) for assimilation illumination of greenhouse plants (8), in which a trolley (6) with a lamp unit (7) at both sides is moveable horizontally along a specifically constructed suspension rail (2), in which the mentioned suspension rail (2) is moveable in vertical sense in relation to the bottom side of the roof trusses (4) of the horticulture or market-garden greenhouse (5) with help of a specifically constructed cable system (3) and in which several suspension rails (2) can be simultaneously moved up and down by means of a central driving shaft (15) with electromotor, which can be operated with a switch on a column.

## Description

The present invention relates to an apparatus for assimilation illumination of crops in horticulture or market-gardening greenhouses, consisting of a trolley with lighting elements or lamp units movable along an almost horizontal suspension rail, in which the mentioned suspension rail is provided with embedded telescopic electric conductors at the bottom side in order to provide the trolley with slide contacts and the therein placed electromotor with choke with the required voltage, in which the mentioned embedded electric conductors are powered by a distribution system for electric energy, in which the mentioned trolley is provided with runner wheels at the top side in order to move along the bottom edge of the suspension rail.

A somewhat similar apparatus is know from the Dutch patent document number 1009354, submitted on 09-06-1998, titled "Apparatus for moveable electric consumers in a space such as a horticulture greenhouse", from J.J. Agrotech B.V. in VENLO, The Netherlands, with inventors Van RENS, Jozef, Gerardus, Marie in Roermond and RUTTEN, Jacobus, Christiaan, Peter in Venlo. It concerns an apparatus for providing moveable electric consumers such as growth lamps in a space such as a horticulture greenhouse. The apparatus consists of a separate distribution rail system for distributing electric power at greenhouse truss height and also a guiding rail system set up for mechanically guiding the electric powered trolley and provided with assimilation or growth lamps, in which a distribution box connects the distribution rail system, in which the mentioned guiding rail system can be mounted at the required place at the bottom side of the portal frametimber or lattice truss of the greenhouse.

In the accompanying innovation research of the abovementioned Dutch patent no. 1009354 in the International Classification system patent documents have been found under the classes F21V, H01R, A01G which only show the general state of the art (category A), but are not seen as of any importance. It concerns patent documents FR 2162610 A (EISENBERG); US 4441145 A (ANTKOWAIK); NL 7613233 A (VAN GEEST VERWARMINGSTECHNIEK); US 3391377 A (CORL ET AL.).

The known installations for moveable electric consumers, such as in this case growth lamps for assimilation illumination in a horticulture greenhouse, are moveable in horizontal direction along an elementary constructed rail, which are provided with electric conductors for the slide contacts of the so called trolley with the growth lamp underneath. The whole shows a number of disadvantages, being that in vertical sense the adjustment of the height of the growth lamps in relation to the plants is not centrally possible, so that an adequate adjustment of the assimilation illumination is not possible in an economical way and in which the spans of the suspension rail from truss to truss are limited due to the cross-sectional shape. In short, it is a limited flexible system, which is a disadvantage for large greenhouses regarding labour costs. For the in the innovation research reported literature counts, that this regards distribution systems for electric power for the illumination of plants in greenhouses, in which flexibility is not or hardly an issue. Shortly, the known systems for illuminating greenhouse plants have a number of disadvantages with regard to a very flexible operated illumination of the mentioned greenhouse plants during growth, in which a fast height adjustment is of special importance. Further, the free span lengths of the several suspension rails and electric conductors are limited, which, in practice, leads to cost increase of the system to be installed.

The aim of the present invention is to provide such an improved automatized apparatus for illumination of greenhouse plants of which the aforementioned disadvantages are eliminated and which apparatus is extremely flexible in installation and use and in which installation costs can take place in an economical responsible way.

For this an improved automatized apparatus for illumination of greenhouse plants is further developed in such an inventive way, that the mentioned suspension rail transverse on the truss construction of the greenhouse is mounted vertically movable onto a specific ally constructed cable system with pulleys and a central driving shaft, in which the suspension rail has a suitable length L1, which is unrestrictedly extendable with coupling plates, in which the trolley is provided with wheels at the top side which run over a specially shaped bottom edge of the suspension rail with a mainly I-shaped cross-section and with height H and at both ends of the body of the I-shaped cross-section formed edges for the mentioned telescopic coupling plates, in which mentioned embedded electric conductors covered with an isolating plastic are slided in a specially constructed bottom edge and can have a length of approximately 3L1, in which mentioned embedded electric conductors can be reached from the outside for the electric slide contact applied at the top of mentioned trolley for the power supply of the chokes for the lamp units and electromotor for driving a locomotion wheel beneath against mentioned suspension hook, in which the trolley with its own length L2 is provided at both sides actually at both ends with specifically formed lamp units with a length L3, in which the material of the apparatus has a sufficiently high elastic modulus and flexural strength/ rigidity.

The advantage is, that an improved automatized apparatus for illuminating greenhouse plants is developed with the following main characteristics:
- a trolley with lamp units at both sides, horizontally moveable along a specifically constructed suspension rail;
- a suspension rail moveable in vertical sense by means of a special cable system;
- a suspension rail with a special cross-section for larger spans and flexibly linkable and in which especially larger lengths can be slided in onto electric conductors;
- with a special cable system several suspension rails can be simultaneously adjusted in height with a single switch, which is especially concerning labour hours economically in use.

Further, the apparatus according to the invention is further developed in such a way, that the mentioned specific cable system consists of an almost horizontal stretched operating cable driven by a central driving shaft with electromotor and at every greenhouse truss is always a suspension cable, which then runs over a pulley and is connected at one side at the top side of the mentioned suspension rail provided with a specific suspension bracket and at the other side is connected to the mentioned operating cable and in which the mentioned pulley is suspended by means of a second suspension cable to the mentioned truss, through which the mentioned suspension rail with mentioned specific cable system can be moved up and down in a vertical sense.

The advantage is a very economical central operating system to adjust several suspension rails in height with a single switch, so that the adjustment of the illumination of large sections above the plants in greenhouses can be done in less than no time.

Furthermore, the apparatus according to the invention is further developed in such a way, that mentioned suspension rail has a height H of at least 70 to 80 mm, in which the moment of inertia is sufficiently large in connection with the deflection, in which the material of the suspension rail is aluminium (extruded profile) and in which L1 can vary from 4,00 to 6,00 m, preferably approximately 5,00 m, in which the coupling plates are telescopic at the ends and connect the profiles click or moment fixed onto the mentioned suspension rail by lateral pressing.

The advantage is a rigid beam for the suspension rail which can be coupled very easily and in which the free span is at least 5 meter.

Further, the apparatus according to the invention is further developed in such a way, that the mentioned embedded electric conductors are positively loaded 3-core conductors and lay recessed embedded in the electric isolating cover, in which the length can usually be approximately 3L1 = 15 m and can be slided completely in the mounted suspension rail, in which the slide contacts are block-shaped current collector and can be clicked in at the top side of the mentioned trolley.

The advantage is that the sliding in of larger lengths (3L1) to 3-core power conductors is possible, through which the economic use of material is strongly stimulated.

Furthermore, the apparatus according to the invention is further developed in such a way, that the trolley with length L2 (=approximately 900 mm) which at both ends is provided with a lamp unit with a length L3 (=approximately 320 mm), running along the bottom flange of mentioned suspension rail, which by means of a specific cable system with pulleys is suspended from the greenhouse trusses and so illuminate a part of the greenhouse of approximately 6,40 x 15,00 mm (approximately 100 m²), in which the speed of the trolley is adjustable via mentioned chokes and the system is powered by a switch on the column in the greenhouse from the mentioned electric distribution system with the coil-shaped wound up cable provided with a plug and a specially protected wall socket for connection to the previously mentioned electric conductors in the suspension rail, and that the mentioned almost horizontally stretched operating cable driven by an electromotor can always be switched on separately from the mentioned distribution network with a separate switch mounted on the column and thus in sections of 6,40 x 15,00 m the height adjustment of the suspension rails can be controlled in one go.

The advantages are that the illumination above large sections of the greenhouse plant can be adjusted in a very simple way and with little time loss, through which considerable financial advantages are created for the market-gardener with regard to labour costs and furthermore that the distribution system for electric power can be further optimised.

Furthermore, the apparatus according to the invention is further developed in such a way, that the mentioned coil-shaped wound up cable with plug can be slided in the wall socket or the circuit connector by means of moving a blocking element.

The advantage is that for connection to the electric power network no dangerous situations can occur.

The preferred construction of the invention will be described by way of example, and with reference to the accompanying drawing.
In which:
- Fig. 1: shows in oblique projection the improved automatized apparatus as guiding rail system for horizontally and vertically moving the assimilation illumination above greenhouse plants according to a preferred embodiment of the invention;
- Fig. 2: a cross-section over the line II of figure 1, in which the improved automatized apparatus as guiding rail system with lamp units and cable system are shown in more detail in side view and are constructed according to a preferred embodiment of the present invention;
- Fig. 3: a cross-section over the line III of figure 2 showing the details of the guiding rail or suspension rail according to a preferred embodiment of the invention;
- Fig. 4: shows an enlargement of the detail IV of figure 2, being the suspension bracket from suspension rail to suspension cable;
- Fig. 5: shows an enlargement of the detail V of figure 2, being the suspension system of the suspension cable with pulley from the greenhouse truss or greenhouse portal frametimber and from the operating cable for the adjustment in height of the partly indicated suspension bracket;
- Fig. 6A: shows a further detail or enlargement of the
- up to 6C: central control shaft with bearings (detail VI of figure 2) for the operating cable of the mentioned specific cable system according to a preferred embodiment of the invention; and
- Fig. 7A up to 7C: a further enlargement of detail VIII of figure 2 of the coil or spiral shaped winded cable with specially secured wall socket for power supply of the electric conductors in the suspension rail.

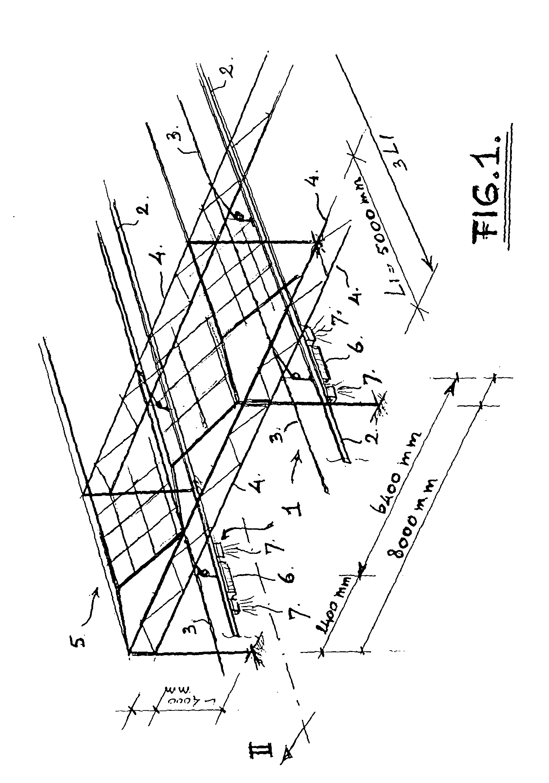

Figure 1 shows in oblique projection roughly the improved automatized apparatus 1, consisting of a suspension rail 2 suspended from a specific cable system 3 from the greenhouse trusses 4 of the roughly indicated horticulture greenhouse 5, in which along the mentioned suspension rail 2 a trolley 6 with lamp units 7 can be moved. Figure 1 shows that a trolley 6 with lamp units 7 can illuminate a section in the greenhouse 5 of 6400 x 3L1 = 6,40 x 15,00 m² (=approximately 100m²).

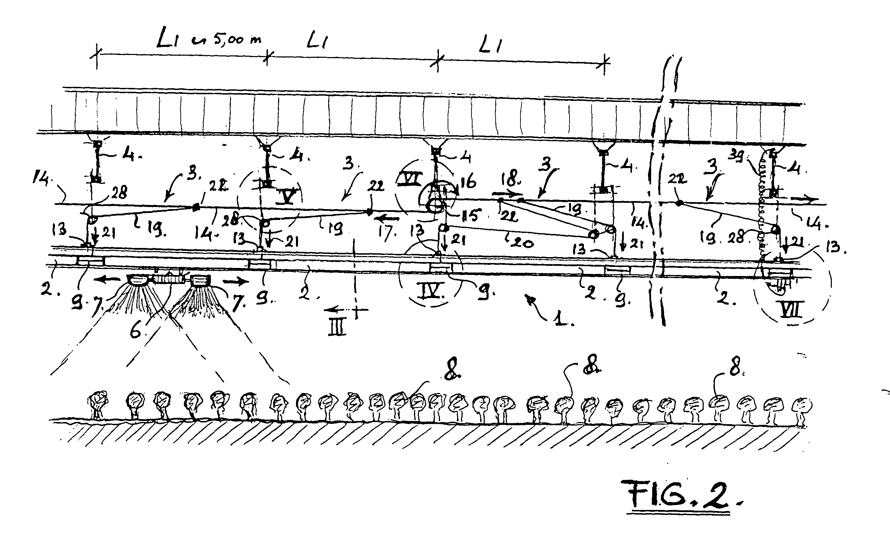

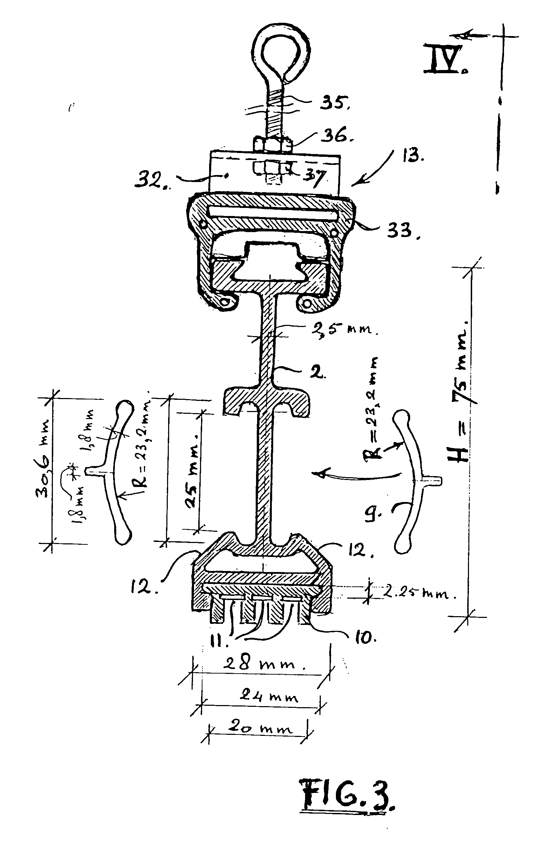

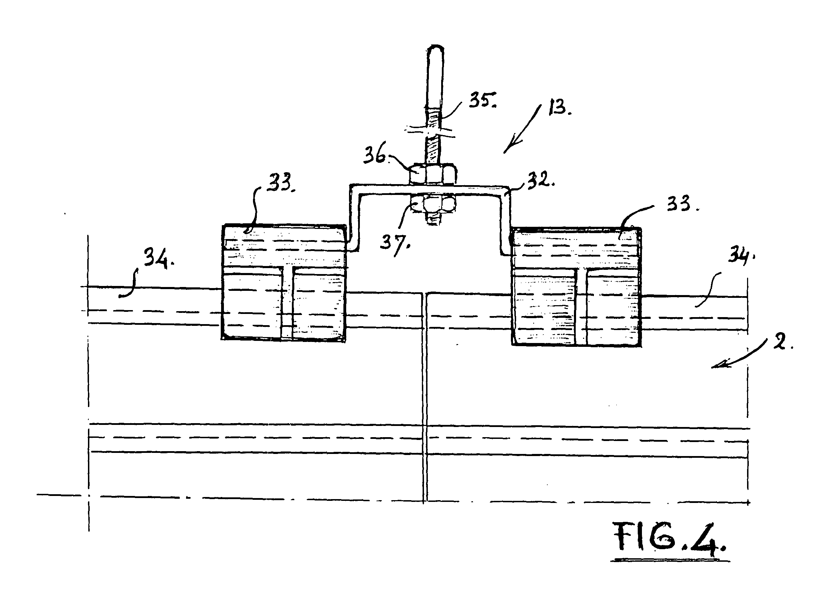

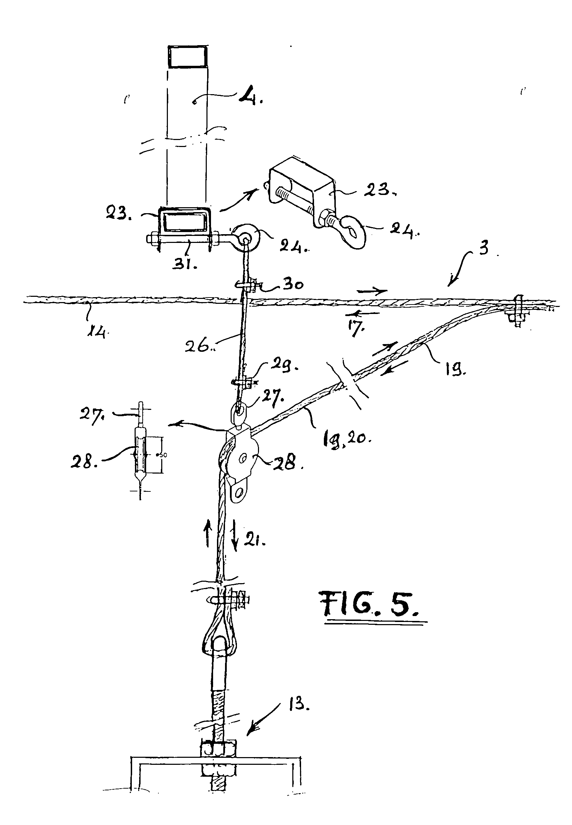

Figure 2 shows a cross-section over the line II of figure 1. Here, it thus concerns the improved automatized apparatus in side view for the illumination of greenhouse plants 8 according to a preferred embodiment of the present invention. The apparatus 1 consists of a continuous suspension rail 2 under the trusses, which are interconnected with coupling plates 9, in which, as can be seen in figure 3, at the bottom side over 3L1 length a strip 10 with electric conductors 11 can be slided in. From the suspension rail 2 a trolley 6 drives over the bottom flange 12 of the suspension rail 2 with a lamp unit 7 at both sides for the illumination of the greenhouse plants 8. The suspension rail 2 is mounted to the mentioned specific constructed cable system 3 by means of a suspension bracket 13 (see also figure 4) to be adjusted in height in relation to the greenhouse plants. The mentioned specific cable system 3 consist of an almost horizontally stretched operating cable 14, which is winded around a central driving shaft 15 and which is driven by a not indicated electromotor. When the central driving shaft 15 is turned in direction 16, the operating cables will start moving in direction 17, 18, through which the so called suspension cables 19, 20 are moved in direction 21 and the suspension rail 2 goes down. Next, the suspension rail 2 will be turned upwards in the opposite turning direction of 16. The suspension cables 19, 20 are mounted on the mentioned suspension bracket 13 of the suspension rail 2 at one side and at the other side by means of a clamp 22 on the horizontally stretched operating cable 14. By means of a second suspension cable 26 the suspension cables 19, 20 are suspended from the trusses 4 of the greenhouse. The second suspension cable 26 is mounted to a flanged strip 23 with threaded bolt and eye 24 (see figure 5) at one side and at the other side to an eye 27 of the pulley 28. The second suspension cable 26 is mounted at length with clamps 29 and 30. The second suspension cable 26 can also be thrown over the stem 31 rather than through the eye 24, in which the legs of the flanged strip 23 should be a little longer and in which a more central load of the greenhouse truss is created. Figure 3 shows in cross-section and with that is detail suspension rail 2 with strip 10 with electric conductors 11 and suspension bracket 13. The indicated measurements are preferred measurements and, if required, can be adjusted in special circumstances. Figure 4 shows the suspension bracket 13 in side view mounted to the suspension rail 2 (partly drawn).

The suspension bracket 13 is constructed of a strip 32 with two end blocks 33 to be slided over the upper flange 34 of the suspension rail 2. With help of a threaded bolt 35 with eye and double nuts 36, 37 this and that is mounted to strip 32 and to suspension cable 19, 20 (not indicated).

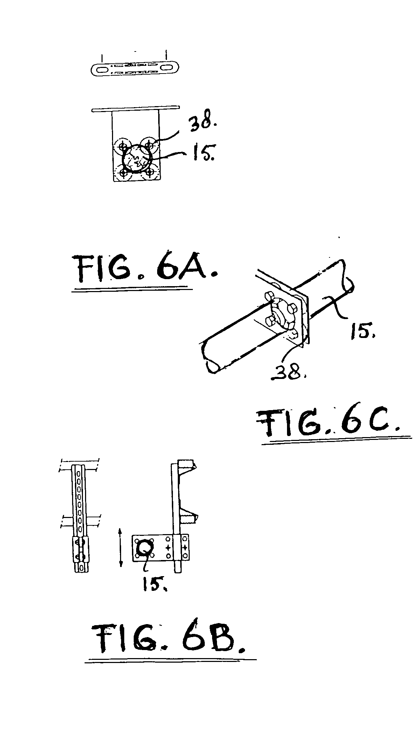

Figure 5 has already been described above and has been referred to for the sake of brevity. Figures 6A up to 6C show a detailed enlargement of the central driving shaft 15 with bearings 38 in several positions.

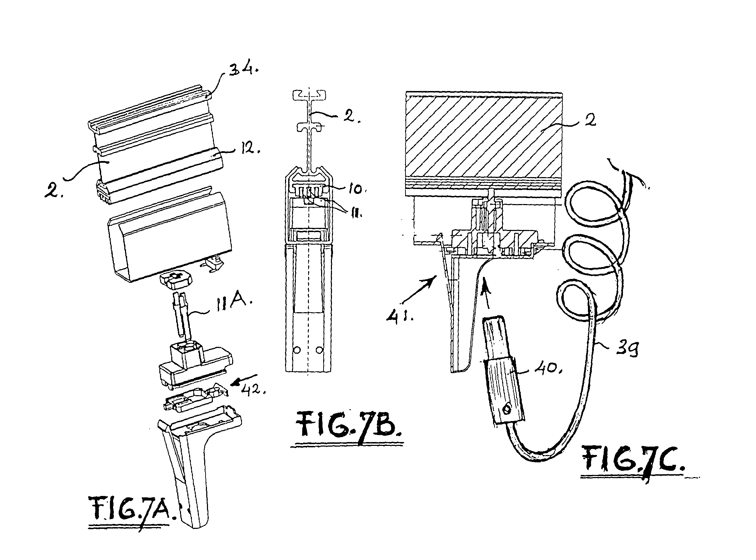

Figures 7A up to 7C show a further enlargement of detail VII of figure 2 of the spiral-shaped winded up cable 39 with plug 40 and special secured wall socket 41 for connection to the electric conductors 11 of the strip 10 (figure 3). Firstly, a special blocking element 42 must be moved before placing the plug 40 into the wall socket 41 or circuit connector, so that no one can touch the electric conductors 11A with his/her fingers.

Finally it has to be emphasized, that the above description constitutes a preferred embodiment of the invention, but that further variations and modifications are still possible without departing the scope of this patent document.

## Claims

1. Apparatus for assimilation illumination of crops in horticulture or market-gardening greenhouses, consisting of a trolley with lighting elements or lamp units movable along an almost horizontal suspension rail, in which the mentioned suspension rail is provided with embedded telescopic electric conductors at the bottom side in order to provide the trolley with slide contacts and the therein placed electromotor with choke with the required voltage, in which the mentioned embedded electric conductors are powered by a distribution system for electric energy, in which the mentioned trolley is provided with runner wheels at the top side in order to move along the bottom edge of the suspension rail, **characterized in that**, the mentioned suspension rail (2) transverse on the truss construction (4) of the greenhouse (5) is mounted vertically movable onto a specific constructed cable system (3) with pulleys (28) and a central driving shaft (15), in which the suspension rail (2) has a suitable length L1, which is unrestrictedly extendable with coupling plates (9), in which the trolley (6) is provided with wheels at the top side which run over a specially shaped bottom edge (12) of the suspension rail (2) with a mainly I-shaped cross-section and with height H and at both ends of the body of the I-shaped cross-section formed edges for the mentioned telescopic coupling plates (9), in which the mentioned embedded electric conductors (11) covered with an isolating plastic are slided in a specially constructed bottom edge (12) and can have a length of approximately 3L1, in which the mentioned embedded electric conductors (11) can be reached from the outside for the electric slide contact applied on top of the mentioned trolley (6) for the power supply of the chokes for the lamp units (7) and electromotor for driving a locomotion wheel beneath against the mentioned suspension hook (2), in which the trolley (6) with its own length L2 is provided at both sides actually at both ends with specifically formed lamp units (7) with a length L3, in which the material of the apparatus has a sufficiently high elastic modulus and flexural strength/rigidity.

2. Apparatus as claimed in claim 1, **characterized in that**, the mentioned specific cable system (3) consists of an almost horizontal stretched operating cable (14) driven by a central driving shaft (15) with electromotor and at every greenhouse truss (4) is always a suspension cable (19, 20), which then runs over a pulley (28) and is connected at one side at the top side of mentioned suspension rail (2) provided with a specific suspension bracket (13) and at the other side is connected to mentioned operating cable (14) and in which the mentioned pulley (28) is suspended by means of a second suspension cable (26) to mentioned truss, through which mentioned suspension rail (2) with mentioned specific cable system (3) can be moved up and down in a vertical sense.

3. Apparatus as claimed in claims 1 and 2, **characterized in that**, mentioned suspension rail (2) has a height H of at least 70 to 80 mm, in which the moment of inertia is sufficiently large in connection with the deflection, in which the material of the suspension rail is aluminium (extruded profile) and in which L1 can vary from 4,00 to 6,00 m, preferably approximately 5,00 m, in which the coupling plates (9) are telescopic at the ends and connect the profiles click or moment fixed onto the mentioned suspension rail (2) by lateral pressing.

4. Apparatus as claimed in claim 1, **characterized in that**, the mentioned embedded electric conductors (11) are positively loaded 3-core conductors and lay recessed embedded in the electric isolating cover, in which the length can usually be approximately 3L1 = 15 m and can be slided completely in the mounted suspension rail (2), in which the slide contacts are block-shaped current collector and can be clicked in at the top side of the mentioned trolley (6).

5. Apparatus as claimed in aforementioned claims, **characterized in that**, the trolley (6) with length L2 (=approximately 900 mm) which at both ends is provided with a lamp unit (7) with a length L3 (=approximately 320 mm), running along the bottom flange of mentioned suspension rail (2), which by means of a specific cable system (3) with pulleys (28) is suspended from the greenhouse trusses (4) and so illuminate a part of the greenhouse of approximately 6,40 x 15,00 mm (approximately 100 m²), in which the speed of the trolley (6) is adjustable via the mentioned chokes and the system is powered by a switch on the column in the greenhouse (5) from the mentioned electric distribution system with the coil-shaped winded up cable (39) provided with a plug (40) and a specially protected wall socket (41) for connection to the previously mentioned electric conductors (11) in the suspension rail (2) .

6. Apparatus as claimed in claim 2, **characterized in that**, mentioned almost horizontal stretched operating cable (3) driven by an electromotor can always be switched on separately from the mentioned distribution network with a separate switch mounted on the column and thus in sections of 6,40 x 15,00 m the height adjustment of the suspension rails (2) can be controlled in one go.

7. Apparatus as claimed in claim 5, **characterized in that**, the mentioned coil-shaped wound up cable (39) with plug (40) can be slided in the wall socket (41) or the circuit connector by means of moving a blocking element (42) .

8. Apparatus as claimed in claim 5, **characterized in that**, the mentioned lamp units (7) each contain 4 illumination tubes with approximately 600 Watt power.

9. Apparatus as claimed in aforementioned claims, **characterized in that**, the mentioned trolley (6) is made of aluminium and has an almost oval rectangular cross-section, which is provided with a separate plate at the top side for receiving the current collectors by clicking in or sliding in and rolling elements or wheels from the suspension rail (2)

10. Apparatus as claimed in aforementioned claims, **characterized in that,** the mentioned apparatus (1), such as the suspension rail (2), trolley (6) and lamp units (7) can be uncoated, but can be provided with markings, logo's and such.
